# EUROPEAN PATENT APPLICATION

(11) **EP 2 863 132 A2**
(43) Date of publication of application: **22.04.2015**
(21) Application number: 13806062.9
(22) Date of filing: 14.06.2013
(51) Int. Cl.: F24D 19/00, F16M 11/00

(54) **SYSTEM OF BOILER EQUIPMENT AND THE COMPONENTS AND STRUCTURAL ELEMENTS OF SUCH A SYSTEM**

(30) Priority: 18.06.2012 RU 2012125171
(71) Applicant: Razional Energie Systeme GmbH, 82467 Garmisch-Partenkirchen (DE)
(72) Inventor: MALTSEV, Aleksander Anatolyevich, 143026, Moskovskaya obl. (RU)
(74) Representative: Lobemeier, Martin Landolf
(86) International application number: PCT/RU2013/000491
(87) International publication number: WO 2013/191585

(57) **Abstract**

The group of inventions relates to installations (including boiler installations) which use a heat carrier to fulfill the functions thereof, and also to units and structural elements used in such installations. Specifically, the distinguishing characteristic of the system of boiler equipment is a composite body comprised of elements, the number of which corresponds to the number of units. The body elements are assembled so as to form, in the top part of the body, at least one channel for receiving pipelines and/or wires, said pipelines and/or wires connecting the electrical equipment of the units. A distributing heat-carrier collector is laid along the length of the body and is also comprised of component elements, the number of which corresponds to the number of units through which the heat-carrier passes. The pumps of such units are installed vertically on the uppermost horizontal cross-piece of the body, with the engine on top. The claimed group makes it possible to increase the compactness, ease of repair, and ease of replacing the entire system or individual units thereof, to unify such units, and also to undertake the installation of said units without the additional use of special equipment.

## Description

The group of utility models relates to plants which use a heating agent for fulfillment of its functions (including boiler plants), as well as units and structural elements used as part of such plants. The group of models functionally relates to plants which are structurally designed for heating and hot water supply to industrial, residential and community facilities, steam or heat generation for process needs.

Heat supply plants are commonly known as boiler plants consisting of a complex of units and designed for generation of hot water under pressure (e.g. see Great Soviet Encyclopedia). Boiler plants (hereinafter referred to as boiler rooms/boiler room) located in separate buildings and/or integrated premises are the combination of a boiler, a burner and auxiliary equipment placed in the entire area of used premises. Apart from the boiler and burner, the boiler room may comprise draft systems, gas-air ducts, water and fuel lines, valves, automation, control and protection devices and units, as well as water-treatment equipment and smoke pipe related to the boiler. However, construction of any stationary boiler room is associated with a number of difficulties which a construction and erection organization is forced to overcome. Complexity often lies in organization and agreement of works on construction of the boiler house, determination of configuration, selection and supply of process equipment, necessity of attachment of equipment and pipelines to walls of premises during its mounting within the newly erected building, and performance of such type of works requires significant time and material expenditures.

Such disadvantages are increased multiply, if the necessity arises to construct the boiler room in remote and hard-to-reach areas, usually not having well-developed infrastructure and/or not able to ensure the adequate organization level of construction and assembly works. Considering them, there have been developed and introduced block-modular boiler plants, the structure of which allows transporting them by all known means of transport and using them for heating and hot water supply to domestic and household facilities. Such plants include block boiler plants of BKU series (see web-site http://gazovik-gaz.ru/catalogue/tku/001/) offered as the closest analogue. The known plants are designed for generation of hot water used as a heating agent in heating and hot water supply systems for facilities of different purpose. Arrangement of said plants includes a hot water boiler, a burner, a feed pump, a water treatment unit and an expansion tank which are installed in a transportable container.

In general terms, the necessity of individual selection of equipment configuration without possibility of its further change, the necessity of individual scheduling of equipment layout within the premises, as well as absence of the possibility of delivery of a mobile boiler plant on a platform without enclosure structures or in separate units for the purpose of allocation in the premises of the existing or newly erected building should be referred to disadvantages of both the closest and other analogues of such plants.

That being said, the author of the claimed group of utility models has set a task to create the boiler equipment system and structural elements as part thereof which are free of specified disadvantages, whereas the technical result achieved upon solution of such a task lies in increase of compactness, maintainability, interchangeability of the system as a whole and separate units in particular, unification of such units, as well as possibility of their mounting without additional application of special-purpose equipment.

In order to achieve the set result, the boiler equipment system is offered containing at least one network circuit equipment unit and/or boilers connection equipment unit and/or boiler plant control unit located on the support and load-bearing frame under the condition of provision of full access thereto along the frame perimeter and absence of attachments to enclosure structures of walls and/or floors, whereas the frame is divided into elements, the number of which corresponds with the number of units, the elements are composed under the condition of formation of at least one channel at the frame top for laying of pipelines and/or conductors connecting electrical equipment of units, and the collector distributing heating agent is laid along the frame and also divided into elements, the number of which corresponds with the number of units, through which heating agent passes, whereas pumps of such units are installed on the frame upper horizontal lintel vertically with the engine up. The preferred but not obligatory system embodiment supposes additional availability of at least one of the following units therein: gas equipment unit, water treatment equipment unit, hot water supply equipment unit, liquid-fuel equipment unit, heat-exchange equipment unit, whereas hot water supply, water treatment, gas equipment units as well as the boiler plant control unit are located successively to the one side from the boilers connection equipment unit, and heat-transfer and network circuit equipment units are located successively to the other side from the boilers connection equipment unit.

In order to achieve the set result, the heat-exchange equipment unit of the boiler equipment system is also offered, containing the frame with unit structural elements installed thereon which include at least one or more plate heat exchangers and/or one or more pumps and/or collector distributing heating agent, whereas the frame is made as two vertical stands connected with each other with at least one horizontal lintel, the heat exchanger is installed horizontally or vertically under the condition of attachment of its upper plate on the said lintel, and the pump is installed vertically with the engine up under the condition of attachment on the said lintel.

Apart from that, in order to achieve the set result, the frame component element of boiler equipment system units is offered, which is made as two vertical stands connected with each other at least at the top by means of at least one horizontal lintel having at least one cavity throughout the length which serves for laying of pipelines and/or conductors connecting electrical equipment of units.

The utility model is illustrated on figures of the frame component element (fig. 1), schematic diagram of the claimed unit (fig. 2), as well as general view of the claimed system in one of possible embodiments (fig. 3).

Possibility of set result achievement in claimed system and unit in general view is conditioned by the structure of the frame which is ready-made and comprises separate unified elements (modules), vertical and horizontal components whereof serve for mounting of structural elements of the corresponding system unit. Assembly of such units is performed at the manufacturing enterprise, and essentially the customer is supplied with the turnkey system ready for connection, the complete equipment of which is determined by its certain requirements. In its turn, unification of frame component elements allows unifying the whole system as well, because its on-site mounting and assembly require only elementary operations on installation of fabricated units and their connection to fuel supply, control and power supply sources.

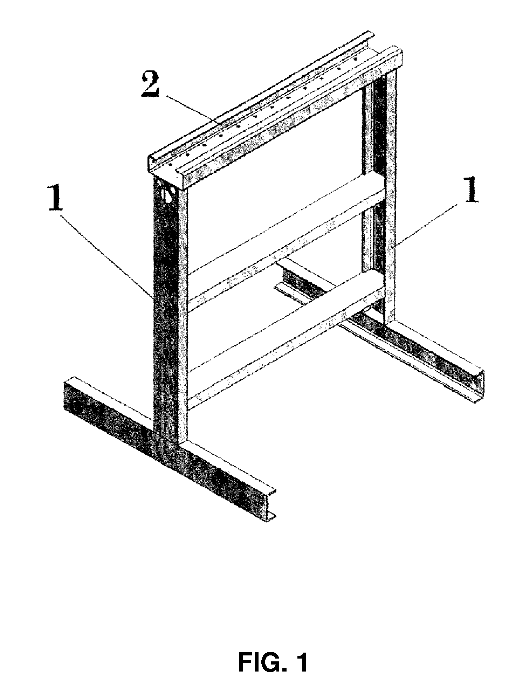

Structurally, the frame component element of boiler equipment system units (fig. 1) consists of two vertical stands 1 connected with each other with horizontal lintels. It is obvious that the number of such lintels may be different; however, as part of the present application, it is essential to make namely the upper one, pos. 2, having the cavity throughout the length. In its turn, elements placed in a row constitute one common plane which allows for compact laying of pipelines and/or electric conductors which connect electrical equipment of units, increasing general compactness of the whole system.

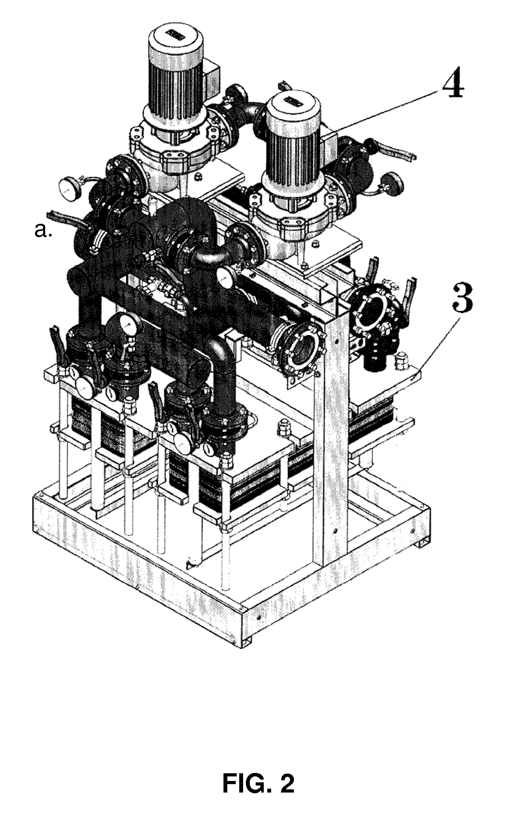

Consider the possibility of set result achievement in terms of the claimed heat-exchange equipment unit (fig. 2). Structurally, the unit is located on the frame component element described above. In case a plate heat exchanger is present, one of horizontal lintels serves for attachment of the upper plate 3 lower part of the heat exchanger thereto, ensuring possibility of its vertical installation and consequently increase of maintainability of the whole unit, because complete removal of the heat exchanger is not necessary for its disassembly - it is sufficient only to disconnect a bolt joint connecting plates. Similarly, in case the pump 4 is present, the horizontal lintel serves for pump upper vertical installation, also increasing general unit maintainability as a result of simplification of mounting/removal of this pump.

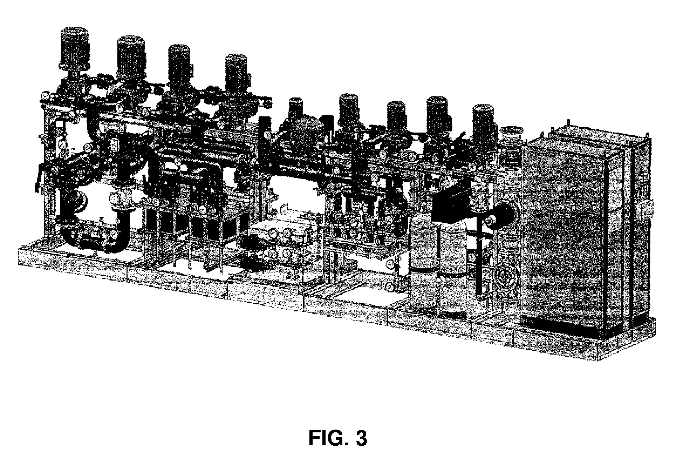

The implementation example of the claimed system presented on the fig. 3 includes the following units: boiler plant control unit, gas equipment unit, water treatment equipment unit, hot water supply equipment unit, boilers connection equipment unit, heat-exchange equipment unit and network circuit equipment unit. However, it is obvious that certain number of units and their technical characteristics may be different and determined by initial conditions of system operation and its required characteristics. Each of specified units is located on the component element described above which allows creating a compact system with possibility of heating agent distribution among collectors, thus ensuring access to working elements of units from any side convenient for maintenance.

Clearly, the foregoing allows making a conclusion on essential advantages of the claimed system, because mobile fulfillment together with compactness of process equipment allocation allows for significant lowering of requirements to dimensions of areas which are rendered suitable for such systems, as well as reduction of time for mounting and assembly of the system from units without additional application of special-purpose equipment.

## Claims

1. The boiler equipment system containing at least one network circuit equipment unit and/or boilers connection equipment unit and/or boiler plant control unit located on the support and load-bearing frame under the condition of provision of full access thereto along the frame perimeter and absence of attachments to enclosure structures of walls and/or floors, whereas the frame is divided into elements, the number of which corresponds with the number of units, the elements are composed under the condition of formation of at least one channel at the frame top for laying of pipelines and/or conductors connecting electrical equipment of units, and the collector distributing heating agent is laid along the frame and also divided into elements, the number of which corresponds with the number of units, through which heating agent passes, whereas pumps of such units are installed on the frame upper horizontal lintel vertically with the engine up.

2. The system according to claim 1, additionally containing at least one of the following units but not limited to the list: gas equipment unit, water treatment equipment unit, hot water supply equipment unit, liquid-fuel equipment unit, heat-exchange equipment unit, whereas hot water supply, water treatment, gas equipment units as well as the boiler plant control unit are located successively to the one side from the boilers connection equipment unit, and heat-transfer and network circuit equipment units are located successively to the other side from the boilers connection equipment unit.

3. The heat-exchange equipment unit of the boiler equipment system containing the frame with unit structural elements installed thereon which include at least one or more plate heat exchangers and/or one or more pumps and/or collector distributing heating agent, whereas the frame is made as two vertical stands connected with each other with at least one horizontal lintel, the heat exchanger is installed horizontally or vertically under the condition of attachment of its upper plate on the said lintel, and the pump is installed vertically with the engine up under the condition of attachment on the said lintel.

4. The frame component element of boiler equipment system units made as two vertical stands connected with each other at least at the top by means of at least one horizontal lintel having at least one cavity throughout the length which serves for laying of pipelines and/or conductors connecting electrical equipment of units.
